# EUROPÄISCHE PATENTSCHRIFT

(11) **EP 2 345 882 B1**
(45) Veröffentlichungstag und Bekanntmachung des Hinweises auf die Patenterteilung: **26.06.2013**
(21) Anmeldenummer: 10015506.8
(22) Anmeldetag: 10.12.2010
(51) Int. Cl.: G01M 15/04

(54) **Verfahren zur Ermittlung der Leistung eines Verbrennungsmotors**
Method for determining the performance of a combustion engine
Procédé de détermination de la puissance d'un moteur à combustion

(30) Priorität: 18.01.2010 DE 102010004935; 25.03.2010 DE 102010012649
(43) Veröffentlichungstag der Anmeldung: 20.07.2011
(73) Patentinhaber: ThyssenKrupp System Engineering GmbH, 74076 Heilbronn (DE)
(72) Erfinder: Lilienkamp, Thorsten, 28357 Bremen (DE); Rohde, Christian, 28359 Bremen (DE)
(74) Vertreter: Möller, Friedrich

(56) Entgegenhaltungen:
- WO-A1-03/054502
- US-A- 3 942 363

## Beschreibung

Die Erfindung betrifft ein Verfahren zur Ermittlung der Leistung eines Verbrennungsmotors gemäß dem Oberbegriff des Anspruchs 1.

Es ist üblich, Verbrennungsmotoren, und zwar sowohl Diesel- als auch Ottomotoren, durch einen sogenannten Kalttest zu prüfen. Dieser Kalttest findet bei unbefeuertem Verbrennungsmotor statt. Das heißt, der Verbrennungsmotor wird im Kalttest schleppend angetrieben und es erfolgt keine Brennstoffeinspritzung. Mit dem Kalttest lassen sich nur Grundfunktionalitäten des Motors, beispielsweise die Dichtheit, Steuerzeiten und funktionierende Sensorik bzw. Aktorik ermitteln.

Vielfach ist es auch gewünscht, bei der Prüfung des Verbrennungsmotors die Leistung desselben zu ermitteln. Dazu ist ein separater Leistungsteststand erforderlich. Außerdem ist der Leistungstest mit einem großen Aufwand verbunden, weil der jeweils zu prüfende Verbrennungsmotor umgebaut werden muss vom Kaltteststand auf den Leistungsteststand und alle erforderlichen Anschlüsse montiert werden müssen.

Aus US 3,942,363 A ist ein System zur Leistungsbestimmung eines Motors mit einem kombinierten Warm- und Kalttest auf einem üblichen Leistungsprüfstand bekannt. Beim Kalttest wird der Motor mit einer Drehzahl von 500 min⁻¹ angetrieben. Beim Warmtest hingegen wird der Verbrennungsmotor mit einer wesentlich höheren Drehzahl angetrieben, die mit beispielsweise bei 2500 m⁻¹ im Nenndrehzahlbereich liegt. Da beim Warmtest keine Kühlung verwendet wird, entstehen beim Warmtest hohe Temperaturen, die zur Schädigung des Motors führen können.

Aus WO 03/054502 A1 ist bekannt, dass zur Leistungsbestimmung eines Motors derselbige im Zuge eines Kalttest kurzfristig befeuert wird und mehrfach auf die maximale Nenndrehzahl beschleunigt wird. Da auch hier der Motor nicht gekühlt wird, kann es auch zu Schädigungen des Motors kommen.

Der Erfindung liegt die Aufgabe zugrunde, ein Verfahren zur Ermittlung der Leistung des Verbrennungsmotors zu schaffen, das mit geringem Aufwand einfach, zuverlässig und schonend für den zu prüfenden Verbrennungsmotor durchführbar ist.

Ein Verfahren zur Lösung dieser Aufgabe weist die Maßnahmen des Anspruchs 1 auf. Demnach ist es vorgesehen, beim Kalttest, insbesondere am Ende des Kalttests oder im Anschluss an den Kalttest mit unbefeuertem Verbrennungsmotor, den Verbrennungsmotor kurzzeitig befeuert zu prüfen, das heißt mit Treibstoffeinspritzung zu betreiben, und zwar vorzugsweise unterhalb der Nenndrehzahl. Bei dieser Prüfung wird das Drehmoment des Verbrenungsmotors gemessen, woraus rechnerisch die zu erwartende Leistung des Verbrennungsmotors ermittelt wird. Das erfindungsgemäße Verfahren lässt es zu, indirekte Vorhersagen über die Leistung des geprüften Verbrennungsmotors zu treffen, ohne diesen dazu auf einem Leistungsprüfstand testen zu müssen.

Das Verfahrens sieht es vor, dass das Drehmomente zur Vorhersage der Leistung des Verbrennungsmotors während des kurzzeitigen Betriebs desselben mit Treibstoffeinspritzung, also bei befeuertem Verbrennungsmotor, mit konstanter Drehzahl oder mit einer sich im engen Drehzahlspektrum bewegenden Drehzahl betrieben wird. Hierbei können mehrere Messwerte, insbesondere Drehmomentenwerte, aufgenommen werden, die aufgrund des Betriebs mit konstanter oder nahezu konstanter Drehzahl theoretisch gleich sein müssten. Sofern dabei Abweichungen auftreten, wobei es sich nur um geringe Abweichungen handeln dürfte, kann zur Ermittlung der Leistung des Verbrennungsmotors ein Mittelwert aus der aufgenommenen Reihe mehrerer Drehmomentenwerte zur Ermittlung der Leistung des Verbrennungsmotors gebildet werden. Hierdurch lässt sich die Leistung des Verbrennungsmotors mit relativ großer Genauigkeit prognostizieren.

Gemäß dem Verfahren findet während des zur Leistungsermittlung erfolgenden kurzzeitigen befeuerten Betriebs des Verbrennungsmotors keine aktive Kühlung, insbesondere keine Fremdkühlung wie zum Beispiel eine Wasserkühlung, des Verbrennungsmotors statt. Während des zur Leistungsermittlung ausreichenden kurzzeitigen befeuerten Betriebs erwärmt sich der Verbrennungsmotor nicht so weit, dass eine Fremdkühlung erforderlich ist, weil die Leistungsermittlung bei einer niedrigen Drehzahl des Verbrennungsmotors stattfindet, die unterhalb seiner Nenndrehzahl liegt, sich vorzugsweise lediglich im Bereich der Leerlaufdrehzahl befindet. Es kann sich hierbei um eine Drehzahl im Bereich von 300 bis 800 min⁻¹ handeln.

Das Verfahren ist ferner so ausgebildet, dass ein zum schleppenden Antrieb des Verbrennungsmotors beim unbefeuerten Kalttest dienender Motor, vorzugsweise Elektromotor, auch als Anlasser zum Starten des Verbrennungsmotors für den befeuerten Kalttest verwendet wird.

Das Verfahren sieht es außerdem vor, die Leistung des Verbrennungsmotors vorherzubestimmen durch Heranziehung eines mittleren Drehmomentenverlaufs des im Kalttest bei unbefeuertem Verbrennungsmotor ermittelten Drehmoments und des im Anschluss daran bei befeuertem Verbrennungsmotor ermittelten Drehmoments. Die so ermittelten mittleren Drehmomentenwerte lassen eine zuverlässige indirekte Leistungsvorhersage des getesteten Verbrennungsmotors zu. Dies gilt besonders dann, wenn der mittlere Drehmomentenverlauf zur Vorherbestimmung der Leistung des Verbrennungsmotors aus einem statistischen Mittelwert mehrerer Drehmomentenmesswerte beim Kalttest des sowohl unbefeuerten als auch des befeuerten Motors errechnet wird.

Bevorzugt ist es vorgesehen, im Anschluss an den Kalttest beim unbefeuerten Verbrennungsmotor auf dem Kaltteststand die Leistung des dazu kurzzeitig befeuerten Verbrennungsmotor bei Einspritzung von Treibstoff zu ermitteln. Die Leistungsermittlung des Verbrennungsmotors erfolgt dadurch praktisch beim Kalttest.

Vorzugsweise ist es vorgesehen, dass der Motor nach dem Starten des Verbrennungsmotors, während des vorzugsweise gesamten befeuerten Kalttests, am Verbrennungsmotor, insbesondere an seiner Schwungscheibe, angekuppelt bleibt. Beim befeuerten Kalttest wird dann der Motor, insbesondere Elektromotor, vom Verbrennungsmotor angetrieben bzw. im Leerlauf mitbewegt, wenn der Elektromotor während des befeuerten Kalttests des Verbrennungsmotors stromlos geschaltet ist. Bevorzugt ist es vorgesehen, den Elektromotor während des befeuerten Betriebs des Verbrennungsmotors als Bremsmotor einzusetzen. Der Elektromotor wird dann generatorisch betrieben. Hierbei ist es möglich, den Elektromotor zur Ermittlung des Drehmoments des im Kalttest kurzfristig befeuert betriebenen Verbrennungsmotors einzusetzen. Bei der vorstehend beschriebenen Verfahrensweise nimmt der Elektromotor oder ein sonstiger Motor mehrere Funktionen wahr, je nachdem, ob der Verbrennungsmotor im unbefeuerten oder befeuerten Kalttest betrieben wird. Eine Kupplung zum Trennen des Elektromotors vom Verbrennungsmotor kann dann entfallen.

Es ist ferner vorgesehen, gegebenenfalls den befeuerten Betrieb des Verbrennungsmotors zur Ermittlung des Drehmoments ohne Turbolader durchzuführen. Der Verbrennungsmotor wird demzufolge bei der Ermittlung seiner Leistung als reiner Saugmotor betrieben. Hierbei beeinflusst der Turbolader das Messergebnis nicht. Der Betrieb des Verbrennungsmotors ohne den Turbolader lässt gleichwohl eine zuverlässige Leistungsvorherbestimmung zu.

Das erfindungsgemäße Verfahren kann vorteilhafterweise so weitergebildet sein, dass der Verbrennungsmotor im Anschluss an den bei unbefeuertem Verbrennungsmotor stattfindenden ersten Abschnitt des Kalttests nur dann kurzzeitig befeuert betrieben wird, wenn der Kalttest im unbefeuerten Zustand ergeben hat, dass die Grundfunktionalitäten des Verbrennungsmotors innerhalb zulässiger Toleranzen liegen. Demzufolge unterbleibt die Leistungsermittlung und der dazu erforderliche kurzzeitige befeuerte Betrieb des Verbrennungsmotors, wenn der Verbrennungsmotor beim unbefeuerten Kalttest schon aufgrund der nicht gegebenen Grundfunktionalitäten als nicht in Ordnung befunden wurde. Dadurch kann die dann nicht mehr erforderliche Leistungsermittlung unterbleiben.

Es ist des Weiteren bevorzugt vorgesehen, aus dem mittleren Drehmomentenverlauf die Nettogesamtleistung, die Bruttogesamtleistung und/oder die Verlustleistung des Verbrennungsmotors zu ermitteln. Einzelne oder auch alle dieser Leistungswerte führen zu einer aussagekräftigen Leistungsprognose des getesteten Verbrennungsmotors.

Gegebenenfalls kann das erfindungsgemäße Verfahren so weitergebildet sein, dass die Leistung des Verbrennungsmotors selektiv für einzelne Zylinder, insbesondere jeden einzeinen Zylinder, ermittelt wird. Auf diese Weise sind Aussagen sowie spätere Laufcharakteristik und die Lebensdauer des Verbrennungsmotors oder auch zu erwartende Abnormalitäten bestimmter Zylinder möglich.

Bevorzugt wird die erwartete Leistung der einzelnen Zylinder beim Kaltest festgestellt durch Ermittlung der zylinderbezogenen Differenzfläche der Drehmomentmessung beim unbefeuerten Kalttest und beim befeuerten Kalttest. Die Differenzfläche ist dabei diejenige Fläche, die sich rechnerisch, insbesondere als Integral, der aufgezeichneten Drehmomentenverläufe jedes Zylinders ergibt.

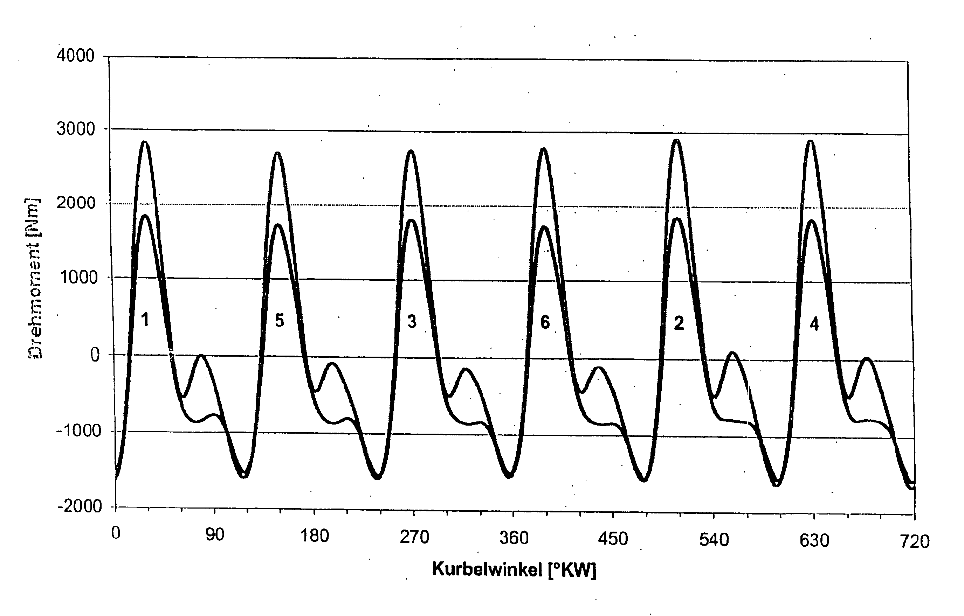

Ein bevorzugtes Ausführungsbeispiel der Erfindung wird nachfolgend unter Bezugnahme auf die einzige Figur der Zeichnung näher erläutern. In dieser Zeichnung sind die bezogen auf die Kurbelwinkel zweier Kurbelwellenumdrehungen ermittelten Drehmomente beim Kalttest des Verbrennungsmotors ohne Einspritzung (unbefeuert) und mit Einspritzung (befeuert) dargestellt.

Die Erfindung wird im Zusammenhang mit der Bestimmung der Leistung eines als sechszylindrigen Dieselmotor ausgebildeten Verbrennungsmotors erläutert. Die Erfindung eignet sich aber auch für jegliche Arten anderer Verbrennungsmotoren.

Die Leistung des Dieselmotors wird nicht direkt auf einem Leistungsprüfstand ermittelt, sondern erfindungsgemäß indirekt bestimmt, indem eine Leistungsvorhersage des getesteten Dieselmotors erfolgt. Die indirekte Bestimmung bzw. Vorhersage der Leistung des Verbrennungsmotors findet erfindungsgemäß im Zusammenhang mit einem Kalttest des Dieselmotors statt.

Der Kalttest des Dieselmotors erfolgt auf einem Kaltteststand. Auf diesem Kaltteststand wird der Dieselmotor zunächst im geschleppten unbefeuerten Zustand ohne Treibstoffeinspritzung geprüft. Der Dieselmotor wird dazu beispielsweise am Schwungrad von einem zum Kaltteststand gehörenden Elektromotor schleppend angetrieben. Dabei sind am Dieselmotor nur solche Komponenten verbaut, die zum Kalttest erforderlich sind, es aber auch ermöglichen, den Dieselmotor kurzzeitig befeuert, das heißt mit Dieseleinspritzungen, zu betreiben. Dabei erfolgt keine Fremdkühlung des Dieselmotors, so dass zum Kalttest, und zwar insbesondere auch in einer solchen Phase des Kalttests, in der der Dieselmotor befeuert betrieben wird, keine Kühlmittelanschlüsse erforderlich sind. Auch ist zum Kalttest des Dieselmotors einschließlich der Leistungsbestimmung desselben der Turbolader (gegebenenfalls auch mehrere Turbolader) entweder noch nicht verbaut oder (wenn er schon verbaut ist) jedenfalls in keinem betriebsbereiten Zustand.

Zur Ermittlung des Drehmoments des Dieselmotors an der Kurbelwelle bzw. der Schwungscheibe in der sowohl unbefeuerten als auch befeuerten Kalttestphase ist ein Drehmomentenaufnehmer vorgesehen, der an geeigneter Stelle der Kurbelwelle oder der Schwungscheibe angeordnet ist, vorzugsweise zwischen dem Elektromotor zum schleppenden Antrieb des Dieselmotors beim unbefeuerten Kalttest und der Schwungscheibe. Des Weiteren ist der Kurbelwelle bzw. der Schwungscheibe ein Wegaufnehmer für den Kurbelwinkel zugeordnet. Dieser kann in den Drehmomentenaufnehmer integriert sein, so dass zwischen dem Elektromotor und der Schwungscheibe ein Drehmomenten-Wegaufnehmer angeordnet ist.

Zur Durchführung des erfindungsgemäßen Verfahrens ist des Weiteren ein Rechner erforderlich, der die kurbelwegbezogenen Drehmomentenwerte beim befeuerten und unbefeuerten Betriebs des zu testenden Dieselmotors speichert, aufzeichnet, gegebenenfalls Mittelwerte mehrerer Drehmomentenmesswerte bildet und auswertet. Die Auswertung der kurbelwellenwinkelbezogenen Drehmomentenmesswerte beim befeuerten und unbefeuerten Betrieb des Dieselmotors erfolgt zur rechnerischen Ermittlung einer prognostizierten Leistung des getesteten Dieselmotors, wobei es sich wegen der Leistungsbestimmung beim Kalttest um prognostizierte Werte handelt.

Das erfindungsgemäße Verfahren läuft wie folgt ab:
Der Dieselmotor wird auf dem Kaltteststand zunächst einem unbefeuerten Kalttest ohne Dieseleinspritzung unterzogen. Bei diesem Kalttest wird der Dieselmotor von einem Elektromotor des Kaltteststands schleppend angetrieben. Am geschleppten Verbrennungsmotor werden im Kalttest übliche Grundfunktionalitäten des Dieselmotors geprüft. Dabei handelt es sich insbesondere um die Dichtheit des Verbrennungsraums,
Steuerzeiten und die Funktion der Sensorik bzw. Aktorik des Dieselmotors.

Es wird außerdem beim geschleppten unbefeuerten Test des Dieselmotors das Drehmoment der Kurbelwelle bzw. am Sprungrad des Dieselmotors bezogen auf den Kurbelwellenwinkel ermittelt. Vorzugsweise wird das Drehmoment für jeden einzelnen Zylinder des Dieselmotors separat ermittelt. Die Drehmomentenermittlung erfolgt bevorzugt über mehrere Arbeitstakte des Dieselmotors. Aus den dabei erhaltenen Drehmomentenwerten werden Mittelwerte des Drehmoments bezogen auf den Kurbelwinkel für die einzelnen Zylinder ohne Einspritzung, also bei unbefeuertem Dieselmotor, ermittelt und vorzugsweise aufgezeichnet.

Der Kalttest des Dieselmotors ohne Einspritzung von Dieselkraftstoff kann sowohl bei unverbautem als auch bei verbautem Turbolader bzw. Turboladern erfolgen. Der Kalttest des unbefeuerten Dieselmotors erfolgt bei für Kalttests üblichen Drehzahlen, die in der Regel unterhalb der Nenndrehzahl liegen.

Im Anschluss an den Kalttest des Dieselmotors ohne Einspritzung von Dieselkraftstoff erfolgt ein kurzzeitiger Kalttest auf dem Kaltteststand im befeuerten Betrieb des Dieselmotors mit Dieselkraftstoffeinspritzung. Dieser befeuerte Testbetrieb erfolgt auf dem Kaltteststand ohne eine Fremdkühlung des Dieselmotors. Deswegen wird diese kurze befeuerte Testphase des Dieselmotors auch noch als Kalttest bezeichnet.

Der Elektromotor zum schleppenden Antrieb des Dieselmotors beim unbefeuerten Kalttest wird als Anlasser verwendet, um den Dieselmotor zum befeuerten Kalttest zu starten. Nachdem der Dieselmotor vom Elektromotor gestartet worden ist, bleibt der Elektromotor
- anders als bei Anlassern üblich - am Dieselmotor, bevorzugt an seinem Schwungrad, angekuppelt. Beim befeuerten Kalttest wird dann der Elektromotor vom Dieselmotor mitgedreht, wenn der Elektromotor stromlos ist.

Bevorzugt ist es beim befeuerten Kalttest des Dieselmotors vorgesehen, den Elektromotor generatorisch als Bremsmotor zu betreiben. Dann kann der Bremsmotor zur Drehmomentenermittlung des Dieselmotors eingesetzt werden. Hierbei kann es ausreichend sein, vom Elektromotor den Dieselmotor nur etwas abzubremsen, also nicht so weit abzubremsen, wie es bei Leistungsprüfstanden, auf denen Verbrennungsmotoren im befeuerten Betrieb mit Fremdkühlung betrieben werden, üblich ist. Beim erfindungsgemäßen Verfahren, bei dem der Dieselmotor ohne Fremdkühlung im sogenannten Kalttest nur kurzfristig befeuert betrieben wird, ist es nicht erforderlich, den Dieselmotor wie bei Leistungsprüfständen üblich abzubremsen, weil die Leistungsbestimmung erfindungsgemäß auf andere Weise erfolgt. Im Übrigen wird beim befeuerten Kalttest gemäß dem erfindungsgemäßen Verfahren der Dieselmotor nicht bei seiner Nenn- oder Maximaldrehzahl geprüft, sondern bei niedrigeren Drehzahlen.

Der Kalttest bei befeuertem Dieselmotor findet ohne Turbolader bzw. mit nicht arbeitendem Turbolader statt. Der Dieselmotor wird deshalb beim befeuerten Kalttest als Saugmotor betrieben.

Der befeuerte Kalttest des Dieselmotors findet nur während weniger Arbeitstakte bei konstanter Drehzahl statt. Diese Drehzahl liegt unterhalb der Nenndrehzahl. Bevorzugt findet der Kalttest bei befeuertem Dieselmotor annähernd im Leerlaufbetriebspunkt statt. Hierbei handelt es sich insbesondere um Drehzahlen im Bereich von 300 bis 800 min⁻¹. Bei dieser niedrigen Drehzahl findet während der kurzen befeuerten Kalttestphase keine nennenswerte Erwärmung des ohnehin noch kalten Dieselmotors statt.

Beim Kalttest des befeuerten Dieselmotors mit Dieseitreibstoffeinspritzung wird auch das Drehmoment des Dieselmotors an der Kurbelwelle bzw. der Schwungscheibe ermittelt, und zwar bei konstanter Drehzahl im oben genannten Bereich. Es werden über mehrere Arbeitstakte Drehmomentenmesswerte bezogen auf den Kurbelwellenwinkel ermittelt, und zwar vorzugsweise für jeden einzelnen Zylinder.

In der Figur ist der Drehmomentenverlauf über den Kurbelwinkel für jeden einzelnen Zylinder des Dieselmotors, und zwar beim unbefeuerten Betrieb ohne Einspritzung und beim befeuerten Betrieb mit Einspritzung, dargestellt. Die obere Kurve mit den höheren Spitzenwerten stellt das beim Kalttest des befeuerten Dieselmotors aufgenommene Drehmoment dar, während die untere Kurve mit geringeren Maximalwerten den beim Kalttest ohne Einspritzung ermittelten Drehmomentenverlauf wiedergibt. In der Figur sind sechs Maximas des Drehmomentenverlaufs dargestellt, wobei jedes Maximum das auf den Kurbelwellenwinkel bezogene Drehmoment eines (anderen) Zylinders des im gezeigten Ausführungsbeispiel sechs Zylinder aufweisenden Dieselmotors dokumentiert. Um welche Zylinder es sich dabei handelt, ergibt sich aus der Zündfolge des Dieselmotors. Bei den gezeigten Messwerten handelt es sich um Mittelwerte, die aus den gemessenen Drehmomenten bei mehreren Arbeitstakten des Dieselmotors ermittelt worden sind. In der Regel reichen fünf Arbeitstakte. Vorteilhafterweise erfolgt die Messung aber über noch mehr Arbeitstakte, und zwar bis zu 10 Arbeitstakte.

Die indirekte Leistungsvorherbestimmung erfolgt als Leistungsvorhersage aus den beim unbefeuerten und befeuerten Kalttest aufgenommenen Mittelwerten der Drehmomente bezogen auf den Kurbelwinkel für einen Arbeitstakt. Dazu wird zylinderselektiv, also für jeden einzelnen Zylinder, die in der Figur dargestellte Differenzfläche der Drehmomentenverläufe mit und ohne Befeuerung des Dieselmotors errechnet. Aus dieser Differenzfläche wird für jeden Zylinder die Leistungsvorhersage mittels Interpolation ermittelt. Dabei ergibt sich eine Vorhersage der Volllastleistung des Dieselmotors, obwohl dieser im Kalttest, und zwar unbefeuert als auch befeuert, nur im Bereich der Leerlaufdrehzahl geprüft worden ist.

Bei der Berechnung der erwarteten Leistung des Dieselmotors ergibt sich die Volllastleistung als eine Funktion der Bruttoleistung aus der Differenzfläche der beim Kalttest ermittelten Drehmomentenwerte, und zwar vorzugsweise der Drehmomentenmittelwerte, mit und ohne Befeuerung des Verbrennungsmotors. Diese Leistung kann auch als Verbrennungsleistung bezeichnet werden, die rechnerisch nach dem erfindungsgemäßen Verfahren aufgrund von beim Kalttest im befeuerten und unbefeuerten Zustand aufgenommenen Drehmomentenwerte ermittelt worden ist.

Aufgrund der zylinderselektiven Ermittlung der Bruttoleistung bzw. Verbrennungsleistung ist es möglich, nach dem erfindungsgemäßen Verfahren rechnerisch die Leistungsverteilung des Dieselmotors zu bestimmen, nämlich schwache bzw. starke Zylinder zu identifizieren.

Die Verlustleistung ist ermittelbar aus dem Drehmomentenmittelwert des jeweiligen Zylinders, der im unbefeuerten Kalttest des Dieselmotors ermittelt worden ist. Addiert auf alle Zylinder ergibt sich die Gesamtverlustleistung.

Die Nettoleistung pro Zylinder ergibt sich aus der Differenz der Bruttoleistung pro Zylinder und der Verlustleistung pro Zylinder. Ebenso ergibt sich die Nettogesamtleistung aus der Differenz der Bruttogesamtleistung und der Verlustgesamtleistung.

Das vorstehend beschriebene Verfahren kann auch im Zusammenhang mit anderen Verbrennungsmotoren, beispielsweise Ottomotoren, durchgeführt werden. Ebenso eignet sich das erfindungsgemäße Verfahren für Verbrennungsmotoren mit beliebiger Zylinderzahl und auch für Verbrennungsmotoren ohne Turbolader. In jedem Falle ist in erfindungsgemäßer Weise die Leistung solcher Verbrennungsmotoren indirekt rechnerisch mit hoher Genauigkeit bzw. Zuverlässigkeit vorherbestimmbar.

## Patentansprüche

1. Verfahren zur Ermittlung der Leistung eines Verbrennungsmotors auf einem Kaltteststand, wobei der Verbrennungsmotor schleppend von einen Elektromotor angetrieben wird und dabei Drehmomente ermittelt werden, der selbe Elektromotor zum Starten des Verbrennungsmotors als Anlasser verwendet wird und der Verbrennungsmotor ohne aktive Kühlung kurzzeitig befeuert betrieben wird, **dadurch gekennzeichnet, dass** während der Befeuerung der Verbrennungsmotor mit konstanter Drehzahl oder mit einer in einem engen Drehzahlspektrum liegenden Drehzahl, die im Bereich des Leerlaufbetriebspunktes des Verbrennungsmotors liegt, betrieben wird, der Elektromotor beim befeuerten Betrieb des Verbrennungsmotors von demselben angetrieben wird und dabei Drehmomentwerte ermittelt werden, wobei aus den so ermittelten Werten die Leistung des Verbrennungsmotors indirekt berechnet wird, indem die Leistung als prognostizierte Leistung des Verbrennungsmotors ermittelt wird aus einem mittleren Drehmomentverlauf beim befeuerten und unbefeuerten Betrieb des Verbrennungsmotors.

2. Verfahren nach Anspruch 1, **dadurch gekennzeichnet, dass** die Leistung auf einem Kaltteststand im Anschluss an den Kalttest des unbefeuerten Verbrennungsmotors ermittelt wird.

3. Verfahren nach Anspruch 1 oder 2, **dadurch gekennzeichnet, dass** der Elektromotor beim befeuerten Betrieb des Verbrennungsmotors generatorisch als Bremsmotor betrieben wird, vorzugsweise zur Ermittlung des Drehmoments des befeuert betriebenen Verbrennungsmotors.

4. Verfahren nach einem der vorhergehenden Ansprüche, **dadurch gekennzeichnet, dass** bei der Ermittlung des Drehmoments während des befeuerten Betriebs des Verbrennungsmotors ein Turbolader nicht betrieben wird.

5. Verfahren nach einem der vorhergehenden Ansprüche, **dadurch gekennzeichnet, dass** der Verbrennungsmotor während der Befeuerung mit einer Drehzahl zwischen 300 und 800 min⁻¹ betrieben wird.

6. Verfahren nach einem der vorhergehenden Ansprüche, **dadurch gekennzeichnet, dass** der Verbrennungsmotor im Anschluss an den Kalttest nur dann kurzzeitig befeuert betrieben wird, wenn der Kalttest des unbefeuerten Verbrennungsmotors ergeben hat, dass die Grundfunktionalitäten des Verbrennungsmotors innerhalb zulässiger Toleranzen liegen.

7. Verfahren nach einem der vorhergehenden Ansprüche, **dadurch gekennzeichnet, dass** die prognostizierte Leistung des Verbrennungsmotors ermittelt wird aus einem auf den Kurbelwinkel bezogenen mittleren Drehmomentenverlauf beim befeuerten und unbefeuerten Betrieb des Verbrennungsmotors.

8. Verfahren nach einem der vorhergehenden Ansprüche, **dadurch gekennzeichnet, dass** aus dem mittleren Drehmomentenverlauf die Nettogesamtleistung, die Bruttogesamtleistung und/oder die Verlustleistung des Verbrennungsmotors vorzugsweise indirekt ermittelt wird.

9. Verfahren nach einem der vorhergehenden Ansprüche, **dadurch gekennzeichnet, dass** die Leistung des Verbrennungsmotors zylinderselektiv ermittelt wird, vorzugsweise durch Ermittlung der zylinderbezogenen Differenzfläche der auf den Kurbelwinkel bezogenen Drehmomentenmesswerte des befeuerten und des unbefeuerten Verbrennungsmotors.

## Claims

1. Method for determining the power of an internal combustion engine on a cold test stand, wherein the internal combustion engine is driven in a dragging manner by an electric motor while torques are being determined, the same electric motor is used as a starter for starting the internal combustion engine and the internal combustion engine is operated briefly in the fired state with no active cooling taking place, **characterized in that**, during the fired state, the internal combustion engine is operated with a constant rotational speed or with a rotational speed which lies in a narrow rotational speed spectrum in the region of the idle operating point of the internal combustion engine, the electric motor is driven by the internal combustion engine during the fired operation of the latter and torque values are determined in the process, and from the values thus determined the power of the internal combustion engine is indirectly calculated **in that** the power is determined as the predicted power of the internal combustion engine from a mean torque profile during the fired and unfired operation of the internal combustion engine.

2. Method according to Claim 1, **characterized in that** the power is determined on a cold-test stand following the cold test of the unfired internal combustion engine.

3. Method according to Claim 1 or 2, **characterized in that** the electric motor is operated in a generative manner as a braking motor during the fired operation of the internal combustion engine, preferably for determining the torque of the internal combustion engine operated in the fired state.

4. Method according to one of the proceeding claims, **characterized in that**, during the determination of the torque during the fired operation of the internal combustion engine, a turbocharger is not operated.

5. Method according to one of the preceding claims, **characterized in that**, during the fired state, the internal combustion engine is operated with a rotational speed of between 300 and 800 rpm⁻¹.

6. Method according to one of the preceding claims, **characterized in that**, subsequently to the cold test, the internal combustion engine is operated briefly in the fired state only if the cold test of the internal combustion engine in the unfired state has yielded that the basic functionalities of the internal combustion engine lie within admissible tolerances.

7. Method according to one of the preceding claims, **characterized in that** the predicted power of the internal combustion engine is determined from a mean torque profile, in relation to the crank angle, during the fired and unfired operation of the internal combustion engine.

8. Method according to one of the preceding claims, **characterized in that** the net total power, the gross total power and/or the power loss of the internal combustion engine is determined, preferably indirectly, from the mean torque profile.

9. Method according to one of the preceding claims, **characterized in that** the power of the internal combustion engine is determined in a cylinder-selective manner, preferably by the determination of the cylinder-specific differential area between the crank-angle-related measured torque values of the internal combustion engine in the fired and unfired states.

## Revendications

1. Procédé de détermination de la puissance d'un moteur à combustion interne sur un banc d'essai à froid, le moteur à combustion interne étant entraîné au ralenti par un moteur électrique et des couples étant ainsi déterminés, ledit moteur électrique étant utilisé en tant que démarreur pour démarrer le moteur à combustion interne et le moteur à combustion interne étant brièvement mis en service sans refroidissement actif, **caractérisé en ce que** pendant la mise en service du moteur à combustion interne à régime constant ou avec un régime se situant dans une plage de régimes étroite, qui se situe dans la plage du point de fonctionnement en marche à vide du moteur à combustion interne, le moteur électrique est entraîné par le moteur à combustion interne lorsque ce dernier est mis en service et des valeurs de couple sont déterminées dans ce cas, la puissance du moteur à combustion interne étant calculée indirectement à partir des valeurs ainsi déterminées en déterminant la puissance en tant que puissance pronostiquée du moteur à combustion interne à partir d'une courbe de couple moyenne lorsque le moteur à combustion interne est en service et n'est pas en service.

2. Procédé selon la revendication 1, **caractérisé en ce que** la puissance est déterminée sur un banc d'essai à froid suite au test à froid du moteur à combustion interne mis hors service.

3. Procédé selon la revendication 1 ou 2, **caractérisé en ce que** le moteur électrique fonctionne en tant que générateur en tant que frein moteur lors de la mise en service du moteur à combustion interne, de préférence pour déterminer le couple du moteur à combustion interne mis en service.

4. Procédé selon l'une quelconque des revendications précédentes, **caractérisé en ce que** lors de la détermination du couple pendant la mise en service du moteur à combustion interne, un turbocompresseur n'est pas mis en service.

5. Procédé selon l'une quelconque des revendications précédentes, **caractérisé en ce que** le moteur à combustion interne pendant la mise en service fonctionne à un régime compris entre 300 et 800 min⁻¹.

6. Procédé selon l'une quelconque des revendications précédentes, **caractérisé en ce que** le moteur à combustion interne, suite à l'essai à froid, n'est mis en service que brièvement une fois que l'essai à froid du moteur à combustion interne mis hors service a montré que les fonctionnalités de base du moteur à combustion interne se trouvaient dans des tolérances admissibles.

7. Procédé selon l'une quelconque des revendications précédentes, **caractérisé en ce que** la puissance pronostiquée du moteur à combustion interne est déterminée à partir d'une courbe de couple moyenne rapportée à l'angle de vilebrequin lorsque le moteur à combustion interne est en service et n'est pas en service.

8. Procédé selon l'une quelconque des revendications précédentes, **caractérisé en ce que** la puissance totale nette, la puissance totale brute et/ou la perte de puissance du moteur à combustion interne sont de préférence déterminées indirectement à partir de la courbe de couple moyenne.

9. Procédé selon l'une quelconque des revendications précédentes, **caractérisé en ce que** la puissance du moteur à combustion interne est déterminée en fonction des cylindres, de préférence en déterminant la différence de surface, rapportée aux cylindres, des valeurs de mesure des couples rapportées à l'angle de vilebrequin du moteur à combustion interne mis en service et hors service.
